Europäisches Patentamt

European Patent Office

Office européen des brevets

(11) Publication number: **0 589 245 B1**

# EUROPEAN PATENT SPECIFICATION

(45) Date of publication of patent specification: **02.11.95**

(51) Int. Cl.⁶: **A01N 47/30**, //(A01N47/30, 43:08)

(21) Application number: **93113958.8**

(22) Date of filing: **01.09.93**

(54) **Composition of herbicides.**

(30) Priority: **03.09.92 GB 9218678**

(43) Date of publication of application:
**30.03.94 Bulletin 94/13**

(45) Publication of the grant of the patent:
**02.11.95 Bulletin 95/44**

(84) Designated Contracting States:
**AT BE CH DE DK ES FR GB GR IE IT LI LU NL PT SE**

(56) References cited:
**EP-A- 0 211 518**
**EP-A- 0 531 116**
**FR-A- 2 547 581**

**DATABASE CHEMABS CHEMICAL AB-STRACTS SERVICE, COLUMBUS, OHIO, US AN: CA117(3): 21863h R.E.BLACKSHAW ET AL. 'Weed control in safflower (Carthamus tinctorius) with flurtamone'**

**DATABASE CHEMABS CHEMICAL AB-STRACTS SERVICE, COLUMBUS, OHIO, US AN: CA114(13): 116854h G.H.FRIESEN ET AL. 'Wild mustard control in sunflower with flurtamone'**

(73) Proprietor: **RHONE-POULENC AGROCHIMIE**
**14-20, rue Pierre Baizet**
**F-69009 Lyon (FR)**

(72) Inventor: **Rognon, Jacques**
**31 Rue de Lattre de Tassigny**
**F-69009 Lyon (FR)**

(74) Representative: **Brachotte, Charles et al**
**RHONE-POULENC AGROCHIMIE**
**Département Propriété Industrielle**
**B.P. 9163**
**F-69263 Lyon Cedex 09 (FR)**

Rank Xerox (UK) Business Services
(3.10/3.09/3.3.3)

**Description**

The present invention relates to new herbicidal compositions comprising a mixture of 5-(methylamino)-2-phenyl-4-[3-(trifluoromethyl)phenyl]-3(2H)-furanone i.e. flurtamone and 3-(4-isopropylphenyl)-1,1-dimethylurea i.e. isoproturon. It also relates to the use of the mixture per se and to a method of controlling weeds.

Flurtamone is a well known selective herbicide disclosed in U.S. Patent No. 4,568,376 and the Pesticide Manual 9th edition (British Crop Protection Council) recommended for the control of a large number of grass and broad-leaved weed species in cotton, peanuts, sorghum and sunflowers, applied pre- or post-emergence. Isoproturon is also a well known selective herbicide disclosed in the Pesticide Manual 9th edition recommended for the control of a large number of grass and broad-leaved weed species in rye, wheat or barley.

However certain individual weed species constitute a serious problem and are insufficiently controlled by either flurtamone or isoproturon alone. Thus Galium aparine, Veronica persica and Veronica hederifolia need to be controlled more effectively.

As a result of research and experimentation it has been found that the use of isoproturon in combination with flurtamone, extends the spectrum of herbicidal activity to include the control of Galium aparine, Veronica persica and Veronica hederifolia. Therefore the said combination represents an important technological advance. The term "combination" as used in this specification refers to the "combination" of flurtamone and isoproturon.

Surprisingly, it has been found that the combined herbicidal activity of flurtamone with isoproturon, for the control of certain weed species is greater than expected, without an unacceptable increase in crop phytotoxicity, when applied for example early post-emergence of the weed species, i.e. the herbicidal activity of flurtamone with isoproturon showed an unexpected degree of synergism, as defined by Limpel, L.E., P.H. Schuldt and D. Lamont, 1962, 1. Proc. NEWCC 16, 48-53, using the formula:-

$$E = X + Y - \frac{X.Y}{100}$$

where

E =   the expected percent inhibition of growth by a mixture of two herbicides A and B at defined doses.

X =   the percent inhibition of growth by herbicide A at a defined dose.

Y =   the percent inhibition of growth by herbicide B at a defined dose.

When the observed percentage of inhibition by the mixture is greater than the expected value E using the formula above the combination is synergistic.

The remarkable synergism on Galium aparine, Veronica persica and Veronica hederifolia gives improved reliability in controlling these serious competitive weeds of many crop species, leading to a considerable reduction in the amount of active ingredient required for weed control.

A high level of control of these weeds is desirable to prevent:-

1) yield loss, through competition and/or difficulties with harvest,

2) crop contamination leading to storage and cleaning difficulties, and

3) unacceptable weed seed return to the soil.

Accordingly, the present invention provides a new herbicidal composition comprising a herbicidally effective amount (e.g. a synergistic herbicidally effective amount) of:

(a) flurtamone; and

(b) isoproturon;

in association with a herbicidally acceptable diluent or carrier and/or surface active agent, provided that where the composition further comprises a single herbicide, the single herbicide is not N-(2,4-difluorophenyl)-2-[3-(trifluoromethyl)phenoxy]-3-pyridinecarboxamide, i.e. diflufenican.

These compositions may be used as herbicides in a broad range of dose rates (a) : (b) depending on the crop to be treated, the weeds present and their population, the compositions used, the timing of the treatment, the climatic and edaphic conditions, and the dose ratio of (a) : (b) required to obtain a satisfactory level of weed control but not necessarily totally weed-free. When applied to a crop-growing area, the rate of application should be sufficient to control the growth of weeds without causing substantial permanent damage to the crop.

Generally a composition in which the ratio of (a) : (b) is from 1:72 to 1:0.2 wt/wt is used, preferably from 1:50 to 1:0.2 wt/wt.

Unless otherwise stated, the percentages and ratios appearing in this specification are by weight.

Generally the active ingredients are homogeneously dispersed in other components cited hereinafter, such as a diluent or carrier and/or surface-active agents.

The term "herbicidal compositions" is used in a broad sense, to include not only compositions which are ready for use as herbicides but also concentrates which must be diluted before use. Preferably, the compositions contain from 0.05 to 90% by weight of flurtamone and isoproturon.

The herbicidal composition may contain solid and liquid carriers and surface-active agents (e.g. wetters, dispersants or emulsifiers alone or in combination). Surface-active agents that may be present in the herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, absorbent carbon black and clays such as kaolin and bentonite. Examples of suitable liquid diluents include water, acetophenone, cyclohexanone, isophorone, toluene, xylene, and mineral, animal, and vegetable oils (these diluents may be used alone or in combination).

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are wettable powders or water dispersible granules. Most preferred herbicidal compositions are aqueous suspension concentrates.

The wettable powders (or powders for spraying) usually contain from 20 to 95% of combination, and they usually contain, in addition to the solid vehicle, from 0 to 5% of a wetting agent, from 3 to 10% of a dispersant agent and if necessary, from 0 to 10% of one or more stabilisers and/or other additives such as penetrating agents, adhesives or anti-caking agents and colourings.

The aqueous suspension concentrates, which are applicable by spraying, are prepared in such a way as to obtain a stable fluid product (by fine grinding) which does not settle out and they usually contain from 10 to 75% of combination, from 0.5 to 15% of surface acting agents, from 0.1 to 10% of thixotropic agents, from 0 to 10% of suitable additives such as antifoams, corrosion inhibitors, stabilisers, and water or an organic liquid in which the active substance is sparingly soluble or insoluble. Some organic solid substances or inorganic salts can be dissolved in order to assist in preventing sedimentation or as anti-freeze for the water.

Herbicidal compositions according to the present invention may also comprise flurtamone and isoproturon in association with, and preferably homogeneously dispersed in, one or more other pesticidally active compounds, provided that where the herbicidal composition comprises a single other pesticidally active compound, the single compound is not diflufenican, and, if desired one or more compatible pesticidally acceptable diluents and carriers.

Preferred herbicidal compositions according to the present invention which comprise flurtamone and isoproturon in association with other pesticides, e.g. herbicides, are those wherein the other herbicide is for example chlortoluron or isoxaben (which are particularly useful where the composition is to be applied to a cereal crop locus)

By way of example, there follows the composition of an aqueous suspension concentrate.

**Example A1:**

| Combination (125g/l flurtamone, 375 g/l isoproturon) | 500 g/l |
|---|---|
| Propylene glycol (anti-freezing) | 50 g/l |
| Organopolysiloxane oil (antifoam) | 4 g/l |
| Polycondensate of ethylene oxide with alkylphenol | 10 g/l |
| Ethopropoxylated block copolymer alkyl phenol | 50 g/l |
| Polysaccharide | 1.5 g/l |
| 1,2-Benzisothiazolin-3-one | 0.75 g/l |
| Water | 473.75 g/l. |

The compositions of the invention may be made up as an article of manufacture comprising flurtamone and isoproturon and optionally other pesticidally active compounds as hereinbefore described, and as is preferred, a herbicidal composition as hereinbefore described and preferably a herbicidal concentrate which must be diluted before use, comprising the flurtamone and isoproturon within a container for the aforesaid flurtamone and isoproturon or a said herbicidal composition and instructions physically associated with the aforesaid container, setting out the manner in which the aforesaid flurtamone and isoproturon or herbicidal composition contained therein, is to be used to control the growth of weeds. The containers will normally be of the types conventionally used for the storage of chemical substances and concentrated herbicidal compositions, which are solids or liquids at normal ambient temperatures, for example cans and drums of plastics materials or metal (which may be internally-lacquered), bottles of glass and plastics materials; and when the contents of the container is a solid, for example a granular herbicidal composition, boxes, for example of cardboard, plastics material, metal or sacks. The containers will normally be of sufficient capacity, to contain amounts of the active ingredients or herbicidal compositions sufficient to treat at least one hectare of ground, to control the growth of weeds therein but will not exceed a size which is convenient for conventional methods of handling. Instructions will be physically associated with the container, for example by being printed directly thereon or on a label or tag affixed thereto. The directions will normally indicate that the contents of the container, after dilution if necessary, are to be applied to control the growth of weeds at rates of application from 50g to 2000g of flurtamone and from 400 to 3600 g of isoproturon per hectare in the manner and for the purpose hereinbefore described.

According to a further feature of the present invention, there is provided a product comprising a synergistic herbicidally effective amount of (a) flurtamone and (b) isoproturon as a combined preparation for simultaneous, separate or sequential use in controlling the growth of weeds at a locus, provided that where the product further comprises a single herbicide, the single herbicide is not diflufenican.

According to a further feature of the present invention there is provided a method of controlling the growth of weeds at a locus which comprises applying to the locus a synergistic herbicidally effective amount of (a) flurtamone, and (b) isoproturon, provided that where a single further herbicide is applied to the locus, the single herbicide is not diflufenican.

They are generally applied at application rates of 50 to 400 g/ha of (a) (e.g. 50 to 100 g/ha or 150 to 400 g/ha), and 400 to 3600 g/ha of (b) (e.g. 500 to 2500 g/ha), in proportions of from 1:72 to 1:1 wt/wt of (a)-:(b) (e.g. 1:50 to 1:5; or 1:24 to 1:1 wt/wt). The method of the invention may be used to control a very wide spectrum of annual broad-leafed weeds and grass weeds in cereal crops, e.g. wheat, barley and rye, without significant permanent damage to the crop. The combined use described above offers both foliar and residual activity and consequently can be employed over a long period of crop development, i.e. from pre-weed pre-crop emergence to post-weed post-crop emergence. In the method according to this feature of the present invention, application of the herbicides to control weeds in an autumn-sown cereal crop, e.g. winter wheat or winter barley, is preferred. Preferably the combination is applied pre-emergence or early post-emergence.

Flurtamone and isoproturon in combination may be used to control the growth of weeds, especially those indicated below, by pre- or post-emergence application in established orchards and other tree-growing areas, for example forests, woods and parks, and plantations e.g. sugar cane, oil palm and rubber plantations. For this purpose they may be applied in a directional or non-directional fashion (e.g. by directional or non-directional spraying) to the weeds or to the soil in which they are expected to appear, before or after planting of the trees or plantations at application rates between 250 g and 1000 g of flurtamone and from 400 g to 3600 g of isoproturon per hectare.

4

Flurtamone and isoproturon in combination may also be used to control the growth of weeds, especially those indicated below, at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. Pre- or post-emergence application, and preferably pre-emergence application, in a directional or non-directional fashion (e.g. by directional or non-directional spraying) at application rates from 500 g to 2000g of flurtamone and from 2 kg to 10 kg of isoproturon per hectare are particularly suitable for this purpose.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. By the term 'early post-emergence application' is meant application to the aerial or exposed portions of the weeds which have emerged above the surface of the soil and are between the cotyledonous stage and the second to third leaf stage (or third and fourth whorl stage) of growth. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled. Weeds that may be controlled by this method include

broad-leafed weeds, for example, Abutilon theophrasti, Amaranthus retroflexus, Bidens pilosa, Chenopodium album, Galium aparine, Ipomea spp. e.g Ipomea purpurea, Lamium purpureum, Matricaria inodora, Sesbania exalta, Sinapis arvensis, Solanum nigrum, Stellaria media, Veronica hederifolia, Veronica persica, Viola arvensis, and Xanthium strumarium,

and grass weeds, for example Alopecurus myosuroides, Avena fatua, Digitaria sanguinalis, Echinochloa crus-galli, Eleusine indica, Lolium multiflorum, Setaria viridis and Sorghum halepense,

and sedges, for example Cyperus esculentus, Cyperus iria and Cyperus rotundus, and Eleocharis acicularis.

The pattern of persistence of flurtamone and isoproturon allow the method of the present invention to be practised by the time-separated application of separate formulations.

In accordance with the usual practice, a tank mix may be prepared prior to use by combining separate formulations of the individual herbicidal components.

The following Experiments illustrate the present invention.

**EXPERIMENTAL PROCEDURE**

Flurtamone and Isoproturon

The experiments were carried out early post-emergence of the weed species at a research farm in Essex, England. A formulation comprising flurtamone and isoproturon ( as an aqueous suspension concentrate) was dissolved in water to give a 650ml solution containing the appropriate concentration of active ingredients. Flurtamone (formulated as water-dispersible granules) and isoproturon (formulated as an aqueous suspension concentrate) were also weighed out individually and dissolved in water to give a 650ml solution containing the appropriate concentration of active ingredient. Each solution was mixed and applied at a spray volume of 231 litres/hectare to a 2 metre by 5 metre test plot comprising the weed species which were sown 45 days earlier. 3 replicates were performed. A control plot was sprayed with a solution not containing test compound. Visual assessment of phytotoxicity was made 198 days after sowing the weed species for each weed species based on a comparison with the control plot.

The tables below show the observed percentage control of the weed species by each combination, with the figure in brackets representing the predicted value using the Limpel formula.

**EXAMPLE B1**

The experiment is carried out having sown Galium aparine seeds.

<table>
<tr><td></td><td colspan="3" align="center"><strong>Isoproturon</strong></td></tr>
<tr><td></td><td>g/ha</td><td>0</td><td>925</td></tr>
<tr><td></td><td>0</td><td>-</td><td>23</td></tr>
<tr><td><strong>Flurtamone</strong></td><td>325</td><td>90</td><td>97(92)</td></tr>
</table>

**EXAMPLE B2**

The experiment is carried out having sown Veronica hederifolia seeds.

<table>
<tr><td></td><td colspan="3" align="center"><strong>Isoproturon</strong></td></tr>
<tr><td></td><td>g/ha</td><td>0</td><td>925</td></tr>
<tr><td></td><td>0</td><td>-</td><td>50</td></tr>
<tr><td><strong>Flurtamone</strong></td><td>325</td><td>37</td><td>83(68)</td></tr>
</table>

**EXAMPLE B3**

The experiment is carried out having sown Veronica persica seeds.

<table>
<tr><td></td><td colspan="3" align="center"><strong>Isoproturon</strong></td></tr>
<tr><td></td><td>g/ha</td><td>0</td><td>925</td></tr>
<tr><td></td><td>0</td><td>-</td><td>93</td></tr>
<tr><td><strong>Flurtamone</strong></td><td>325</td><td>63</td><td>100(97)</td></tr>
</table>

With reference to the formula given at the beginning of the description, the results above clearly demonstrate the synergism obtained with the combination of the invention against Galium aparine, Veronica persica and Veronica hederifolia, which are important weed species.

It will be understood that the results presented above were all obtained in field trials. Such trials generally represent a more rigorous test of herbicidal properties than tests in the greenhouse, where test plants are protected from the variable conditions to which they are inevitably subject in the open field. Because of the variability of conditions in field tests, it is generally more difficult to secure a clear showing of synergism than in greenhouse testing. Nevertheless, herbicidal mixtures which demonstrate synergism in greenhouse testing must, if they are to be of commercial utility, be capable of demonstrating synergism under field conditions, i.e.under the conditions which will prevail when they are used by a farmer. The results obtained in the foregoing Examples therefore represent a particularly clear demonstration of synergism under practical conditions.

**Claims**

1. A herbicidal composition comprising a synergistic herbicidally effective amount of flurtamone, which is 5-(methylamino)-2-phenyl-4-[3-(trifluoromethyl)phenyl]-3(2H)furanone, and isoproturon, which is 3-(4-isopropylphenyl)-1,1-dimethylurea, in association with a herbicidally acceptable diluent or carrier and/or surfactant, provided that where the composition further comprises a single herbicide, the single herbicide is not N-(2,4-difluorophenyl)-2-[3-(trifluoromethyl)phenoxy]-3-pyridinecarboxamide, which is diflufenican.

2. A herbicidal composition comprising a herbicidally effective amount of flurtamone, which is 5-(methylamino)-2-phenyl-4-[3-(trifluoromethyl)phenyl]-3(2H)furanone, and isoproturon, which is 3-(4-isopropylphenyl)-1,1-dimethylurea, in association with a herbicidally acceptable diluent or carrier and/or surfactant, wherein the ratio of flurtamone : isoproturon is from 1:72 to 1:0.2 wt/wt, provided that where the composition further comprises a single herbicide, the single herbicide is not N-(2,4-difluorophenyl)-2-[3-(trifluoromethyl)phenoxy]-3-pyridinecarboxamide, which is diflufenican.

3. The herbicidal composition according to claim 1 or 2 in which ratio of flurtamone:isoproturon is from 1:50 to 1:5 wt/wt.

4. The herbicidal composition according to claim 1 or 2 in which the ratio of flurtamone:isoproturon is from 1:24 to 1:1 wt/wt.

5. The herbicidal composition according to any one claims 1 to 4 in the form of a wettable powder or a water dispersible granule.

6. The herbicidal composition according to any one of claims 1 to 4 in the form of an aqueous suspension concentrate.

7. A product comprising a composition according to claim 1 as a combined preparation for simultaneous, separate or sequential use in controlling the growth of weeds at a locus.

8. A method for controlling weeds at a locus which comprises applying to the locus a synergistic herbicidally effective amount of flurtamone, which is 5-(methylamino)-2-phenyl-4-[3-(trifluoromethyl)-phenyl]-3(2H)-furanone, and isoproturon, which is 3-(4-isopropylphenyl)-1,1-dimethylurea, provided that where a single further herbicide is applied to the locus, the single herbicide is not N-(2,4-difluorophenyl)-2-[3-(trifluoromethyl)phenoxy]-3-pyridinecarboxamide, which is diflufenican.

9. The method according to claim 8 in which the application rate of flurtamone and isoproturon is 50 to 400 g/ha of flurtamone and 400 to 3600 g/ha of isoproturon.

10. The method according to claim 8 or 9 in which the application rate of flurtamone and isoproturon is 50 to 100 g/ha of flurtamone and 500 to 2500 g/ha of isoproturon.

11. The method according to claim 8 or 9 in which the application rate of flurtamone is 150 to 400 g/ha.

12. The method according to any one of claims 8 to 11 for the control of weeds in an autumn sown cereal crop.

13. The method according to any one of claims 8 to 12 by pre-emergence application.

14. The method according to any one of claims 8 to 12 by early post-emergence application.

**Patentansprüche**

1. Herbicide Zusammensetzung, die eine synergistisch herbicid wirksame Menge Flurtamone, d.h. 5-(Methylamino)-2-phenyl-4-[3-(trifluormethyl)-phenyl]-3(2H)-furanon, und Isoproturon, d.h. 3-(4-Isopropylphenyl)-1,1-dimethylharnstoff, zusammen mit einem für Herbicide akzeptablen Verdünnungsmittel oder Träger und/oder grenzflächenaktiven Mittel enthalten, mit der Maßgabe, daß, wenn die Zuammensetzung ferner ein einziges weiteres Herbicid enthält, dieses einzige Herbicid nicht N-(2,4-Difluorphenyl)-2-[3-(trifluormethyl)-phenoxy]-3-pyridincarboxamid, d.h. Diflufenican, ist.

2. Herbicide Zusammensetzung, die eine herbicid wirksame Menge Flurtamone, d.h. 5-(Methylamino)-2-phenyl-4-[3-(trifluormethyl)-phenyl]-3(2H)-furanon, und Isoproturon, d.h. 3-(4-Isopropylphenyl)-1,1-dimethylharnstoff ist, zusammen mit einem für Herbicide akzeptablen Verdünnungsmittel oder Träger und/oder grenzflächenaktiven Mittel, wobei das Gewichtserhältnis von Flurtamone zu Isoproturon 1:72 bis 1:0,2 beträgt, mit der Maßgabe, daß, wenn die Zusammensetzung des weiteren ein einziges weiteres Herbicid enthält, dieses einzige weitere Herbicid nicht N-(2,4-Difluorphenyl)-2-[3-(trifluormethyl)-phenoxy]-3-pyridincarboxamid, d.h. Diflufenican, ist.

3. Herbicide Zusammensetzung gemäß Anspruch 1 oder 2, wobei das Gewichtsverhältnis von Flurtamone zu Isoproturon 1:50 bis 1:5 beträgt.

4. Herbicide Zusammensetzung gemäß Anspruch 1 oder 2, wobei das Gewichtsverhältnis von Flurtamone zu Isoproturon 1:24 bis 1:1 beträgt.

5. Herbicide Zusammensetzung gemäß einem der Ansprüche 1 bis 4 in der Form eines benetzbaren Pulvers oder eines in Wasser dispergierbaren Granulats.

6. Herbicide Zusammensetzung gemäß einem der Ansprüche 1 bis 4 in der Form eines wäßrigen Suspensionskonzentrats.

7. Produkt, das eine Zusammensetzung gemäß Anspruch 1 enthält, als Kombinationspräparat zur gleichzeitigen, getrennten oder aufeinanderfolgenden Anwendung zur lokalen Kontrolle des Wachstums von Unkräutern.

8. Verfahren zur lokalen Kontrolle von Unkräutern, das die lokale Anwendung einer synergistisch herbicid wirksamen Menge Flurtamone, d.h. 5-(Methylamino)-2-phenyl-4-[3-(trifluormethyl)-phenyl]-3(2H)-furanon, und Isoproturon, d.h. 3-(4-Isopropylphenyl)-1,1-dimethylharnstoff, auf die betreffende Stelle umfaßt, mit der Maßgabe, daß, wenn ein einziges weiteres Herbicid lokal ausgebracht wird, dieses einzige weitere Herbicid nicht N-(2,4-Difluorphenyl)-2-[3-(trifluormethyl)-phenoxy]-3-pyridincarboxamid, d.h. Diflufenican, ist.

9. Verfahren gemäß Anspruch 8, wobei die Ausbringmenge an Flurtamone 50 bis 400 g/ha und an Isoproturon 400 bis 3600 g/ha betragt.

10. Verfahren gemäß Anspruch 8 oder 9, wobei die Ausbringmenge an Flurtamone 50 bis 100 g/ha Flurtamone und an Isoproturon 500 bis 2500 g/ha beträgt.

11. Verfahren gemäß Anspruch 8 oder 9, wobei die Ausbringmenge an Flurtamone 150 bis 400 g/ha beträgt.

12. Verfahren gemäß einem der Ansprüche 8 bis 11 zur Kontrolle von Unkräutern in durch Herbstaussaat angebautem Getreide.

13. Verfahren gemäß einem der Ansprüche 8 bis 12, wobei die Anwendung vor dem Auflaufen erfolgt.

14. Verfahren gemäß einem der Ansprüche 8 bis 12, wobei die Anwendung früh nach dem Auflaufen erfolgt.

**Revendications**

1. Composition herbicide, comprenant une quantité à effet herbicide synergique de flurtamone, qui est la 5-(méthylamino)-2-phényl-4-[3- (trifluorométhyl)-phényl]-3(2H)-furannone, et d'isoproturon, qui est la 3-(4-isopropylphényl)-1,1-diméthylurée, en association avec un diluant ou support et/ou surfactant acceptable du point de vue herbicide, sous réserve que, lorsque la composition comprend en outre un seul autre herbicide, ce seul autre herbicide ne consiste pas en N-(2,4-difluorophényl)-2-[3-(trifluorométhyl)-phénoxy]-3pyridinecarboxamide, qui est le diflufénican.

2. Composition herbicide, comprenant une quantité à effet herbicide de flurtamone, qui est la 5-(méthylamino)-2-phényl-4-[3-(trifluoro-méthyl)-phényl]-3(2H)furannone, et d'isoproturon, qui est la 3-(4-isopropylphényl)-1,1-diméthylurée, en association avec un diluant ou support et/ou surfactant acceptable du point de vue herbicide, le rapport flurtamone : isoproturon étant compris dans l'intervalle de 1:72 à 1:0,2 en poids/poids, sous réserve que, lorsque la composition comprend en outre un seul autre herbicide, ce seul autre herbicide ne soit pas le N-(2,4-difluorophényl)-2-[3-(trifluorométhyl)phénoxy]-3-pyridinecarboxamide, qui est le diflufénican.

3. Composition herbicide suivant la revendication 1 ou 2, dans laquelle le rapport flurtamone : isoproturon est compris dans l'intervalle de 1:50 à 1:5 en poids/poids.

4. Composition herbicide suivant la revendication 1 ou 2, dans laquelle le rapport flurtamone : isoproturon est compris dans l'intervalle de 1:24 à 1:1 en poids/poids.

5. Composition herbicide suivant l'une quelconque des revendications 1 à 4, sous forme d'une poudre mouillable ou de granules dispersables dans l'eau.

6. Composition herbicide suivant l'une quelconque des revendications 1 à 4, sous forme d'un concentré de suspension aqueuse.

7. Produit comprenant une composition suivant la revendication 1, sous forme d'une préparation mixte pour une utilisation simultanée, séparée ou séquentielle dans la lutte contre la croissance de mauvaises herbes dans un milieu.

8. Procédé de lutte contre des mauvaises herbes dans un milieu, qui comprend l'application à ce milieu d'une quantité à effet herbicide synergique de flurtamone, qui est la 5-(méthylamino)-2-phényl-4-[3-(trifluorométhyl)phényl]-3(2H)-furannone, et d'isoproturon, qui est la 3-(4-isopropylphényl)-1,1-diméthylurée, sous réserve que, lorsqu'un seul autre herbicide est appliqué à ce milieu, ce seul autre herbicide ne consiste pas en N-(2,4-difluorophényl)-2-[3-(trifluorométhyl)phénoxy]-3-pyridinecarboxamide, qui est le diflufénican.

9. Procédé suivant la revendication 8, dans lequel le taux d'application de flurtamone et d'isoproturon comprend 50 à 400 g/ha de flurtamone et 400 à 3600 g/ha d'isoproturon.

10. Procédé suivant la revendication 8 ou 9, dans lequel le taux d'application de flurtamone et d'isoproturon comprend 50 à 100 g/ha de flurtamone et 500 à 2500 g/ha d'isoproturon.

11. Procédé suivant la revendication 8 ou 9, dans lequel le taux d'application de flurtamone est compris dans l'intervalle de 150 à 400 g/ha.

12. Procédé suivant l'une quelconque des revendications 8 à 11, destiné à lutter contre des mauvaises herbes dans une culture de céréales semées à l'automne.

13. Procédé suivant l'une quelconque des revendications 8 à 12, mis en oeuvre par application en prélevée.

14. Procédé suivant l'une quelconque des revendications 8 à 12, mis en oeuvre par application en post-levée précoce.